# EUROPEAN PATENT APPLICATION

(11) **EP 1 231 811 A2**
(43) Date of publication of application: **14.08.2002**
(21) Application number: 01303279.2
(22) Date of filing: 06.04.2001
(51) Int. Cl.: H04Q 11/00

(54) **Transparent optical-electronic-optical switch**

(30) Priority: 07.02.2001 US 778992
(71) Applicant: Redfern Broadband Networks Pty Ltd, Eveleigh, New South Wales 1430 (AU); Redfern Broadband Networks Inc., Wilmington, County of Newcastle, Delaware, 19801 (US)
(72) Inventor: Halgren, Ross, Collaroy Plateau, New South Wales 2097 (AU)
(74) Representative: Samuels, Adrian James

(57) **Abstract**

An optical switch comprising at least a first demultiplexer (4) for demultiplexing a series of wavelength division multiplexed signals (9) into corresponding spatially separated demultiplexed signals (10); a series of first optical to electronic interface units (5;20) interconnected to said spatially separated demultiplexed signals (10); an electronic switch (3) for transmitting said data stream to one of a series of output ports under the control of an external control signal; a series of second electronic to optical interface units (15;20) at said output ports and at least a first multiplexer interconnected to a plurality of optical interface units (15;20) for multiplexing the optical stream (16) of each interface unit together to form a combined optical data stream output (18).

## Description

### Field of the invention

The present invention relates to an Optical-Electronic-Optical (OEO) switch and in particular an OEO switch that achieves high levels of bit rate transparency.

### Background of the invention

Fully optical (OOO) switches are desirable particularly for their protocol and bit rate transparency. However, a difficulty of OOO switches is that they often do not support wavelength conversion and per-channel performance monitoring. Furthermore, OOO switches may require complex attenuation/dispersion management algorithms to cone with signals arriving from different sources and going to different destinations -- each of which has a different path length.

Another limitation of OOO switches is that a wavelength (λₙ) entering from a port on any trunk of fiber is most easily switched only to the same wavelength (λₙ) port on the other trunk fibers. Furthermore, a fully non-blocking NxN OOO switch array is likely to be under-utilized due to the large number of possible interconnects.

The use of optical amplifiers to amplify many wavelengths simultaneously further leads to significant problems in the management of per channel performance. Further, optical processing techniques are currently not as advanced as electronic signal processing.

Conventional OEO switches overcome the deficiencies of OOO switches but do not achieve the OOO benefits.

### Summary of the invention

It is an object of the present invention to provide an improved form of an optical-electronic-optical switch.

In a first aspect, the present invention provides an optical switch comprising at least a first demultiplexer for demultiplexing a series of wavelength division multiplexed signals into corresponding spatially separated demultiplexed signals; a series of first optical to electronic interface units interconnected to said spatially separated demultiplexed signals; an electronic switch for transmitting said data stream to one of a series of output ports under the control of an external control signal; a series of second electronic to optical interface units at said output ports and at least a first multiplexer interconnected to a plurality of optical interface units for multiplexing the optical stream of each interface unit together to form a combined optical data stream output.

The series of first optical to electronic interface units includes optical to electronic conversion means for converting input optical signals to corresponding electrical signals; data and clock recovery means for recovery of data and corresponding clocking information from said electrical signal and outputting said data as a first data stream, with the data and clock recovery means able to recover data streamed at multiple different clock rates.

The series of second electronic to optical interface units at said output ports, includes data and clock recovery means for recovery of data and corresponding clocking information from said electrical signal and outputting said data as a second data stream; and electronic to optical conversion means for said data stream to a corresponding optical stream.

In another embodiment of the present invention the electronic to optical conversion means comprises an externally or directly modulated semiconductor laser having wavelength specific output characteristics.

In a second aspect, the present invention provides an optical switch comprising at least a first demultiplexer for demultiplexing a series of wavelength division multiplexed signals into corresponding spatially separated demultiplexed signals; a series of first optical to electronic interface units interconnected to said spatially separated demultiplexed signals, an electronic signal switch for transmitting said data stream to one of a series of output ports under the control of an external control signal; a series of second electronic to optical interface units at said output ports, said second electronic to optical interface units including a laser array wavelength matched to the output wavelengths of a first multiplexer and at least a first multiplexer interconnected to a plurality of electronic to optical interface units for multiplexing the optical stream of each interface unit together to form a combined optical data stream output.

The series of first optical to electronic interface units interconnected to said spatially separated demultiplexed signals includes optical to electronic conversion means for converting input optical signals to corresponding electrical signals and data and clock recovery means for recovery of data and corresponding clocking information from said electrical signal and outputting said data as a first data stream.

In a further embodiment of the invention the laser array comprises a fiber laser array.

In a third aspect, the present invention provides a fault tolerant switching unit including a first and second switch constructed in accordance with a first or second aspect of the invention, each switch interconnected to the same first demultiplexing unit and first multiplexer so as to provide fault tolerant operation of said switch.

### Brief description of the drawings

Preferred embodiments of the present invention will now be described with reference to the accompanying drawings.
Fig. 1 illustrates schematically an OEO switch implementation
Fig. 2 illustrates schematically the implementation of a wavelength dependent multi-rate regenerator.
Fig. 3 illustrates schematically the implementation of a wavelength independent multi-rate regenerator.
Fig. 4 illustrates schematically the integration of multiple wavelength independent multi-rate regenerator interfaces with the electronic signal switch part using electrical interconnects between them.
Fig. 5 illustrates schematically a duplicated optical-electronic-optical switch implementation

### Detailed description of preferred and other embodiments

In the preferred embodiment a dense wavelength division multiplexed (DWDM) switching system is disclosed that converts an optical signal having a possibly varying data rate to a corresponding electrical signal. The electrical signal is then fed to an electronic switch for switching to an output port. The output electrical signal is then converted to a corresponding optical signal. By utilising a multirate conversion system, it is possible to deal with many different data rates simultaneously.

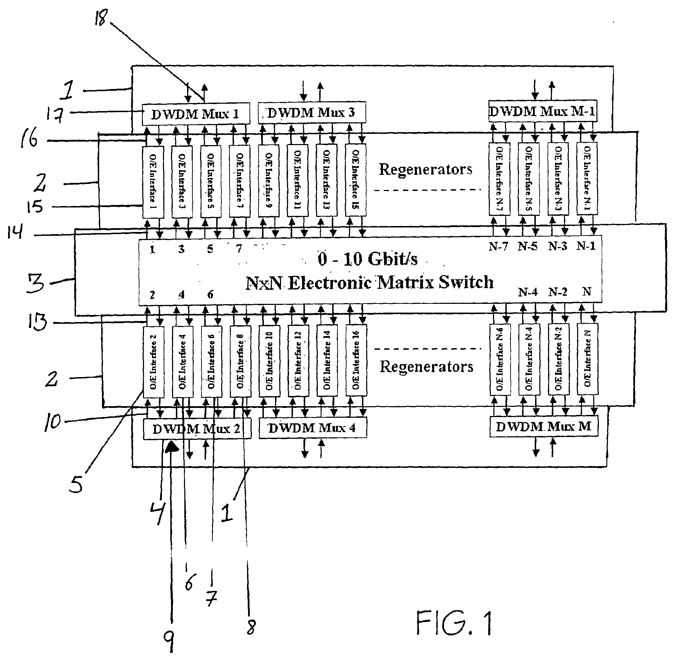

Turning initially to Fig. 1, there is shown a modular, 3-part OEO switch implementation as provided in a first embodiment. The OEO switch consists of a series of multiplexers/demultiplexers 1 connected to a series of opto-electronic regenerator interfaces 2 which in turn are connected to an electronic switch 3 which is switched to an output channel. In the example shown in Fig. 1, a DWDM Multiplexer/Demultiplexer (Mux) 4 is arranged in a manner such that it is connected to four opto-electronic regenerator interfaces (5, 6, 7, and 8). It should be noted, however, that this is used as an example only and does not place any limitations on possible alternative systems. For example, 8 or 16 opto-electronic regenerator interfaces per DWDM Mux 4 can be implemented using the principles of the four opto-electronic regenerator interfaces (5, 6, 7, and 8 that are connected to the DWDM Mux 4).

The operation of the switch is best understood by tracing the path of an incoming signal 9. The signal is multiplexed/demultiplexed 4. The DWDM Mux 4 is arranged in a manner such that it is connected to four opto-electronic regenerator interfaces 5, 6, 7 and 8 each of which is capable of receiving and transmitting signals at the wavelengths initially denoted λ₂, λ₄, λ₆, and λ₈, respectively. After passing through the DWDM Mux 4, a signal is transmitted to the opto-electronic regenerator interface 5. It should be noted that the opto-electronic regenerator interface 5 is chosen as an example only, and the same principles apply to the signal being transmitted through any of the other opto-electronic regenerator interfaces 6, 7 and 8.

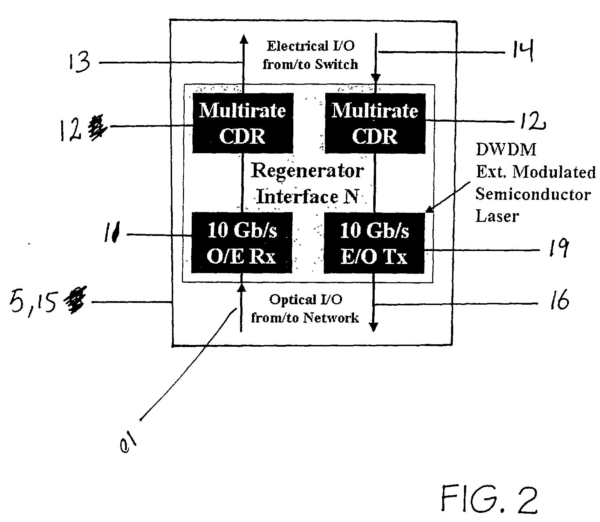

After leaving the DWDM Mux 4 the signal arrives at the opto-electronic regenerator 5, a detailed illustration of which is shown in Fig. 2. Therefore, turning now to Fig. 2, the signal 10 first arrives at the opto-electronic receiver 11 which in a preferred embodiment is of a type that is spectrally broad so that the same receiver (i.e. all the receivers on the opto-electronic regenerator interfaces 6, 7, and 8 etc. of Fig. 1) can be used in all opto-electronic regenerator interfaces, thus reducing the cost of having to match each wavelength from the DWDM filter 4. The opto-electronic receiver 11 is also chosen such that it supports the same bit-rate limit as the bit-rate limited electronic signal switch matrix 3 in Fig. 1.

Once the signal 10 is received at the opto-electronic receiver 11 in Fig. 2 it is then transmitted to a Clock/Data Recovery device (CDR) 12. The function of the CDR 12 is to derive high speed timing signals from the incoming digital signal, and to output a bit clock and suitably retimed data. The CDR 12 is programmable in a manner such that any one of a number of commonly employed bit-rates can be achieved up to a predetermined maximum when an end to end connection is established. Thus, at any point in time the CDR 12 is in effect bit-rate transparent. The CDR 12 may comprise a commercially available integrated circuit such as, e.g. the AMCC S3076 Multi-Rate Clock Recovery Unit, which provides clock recovery and data retiming at rates of 2488.32 Mb/s (OC-48), 2125 Mb/s (Fibre Channel), 1244.16 Mb/s (OC-24), 1250 Mb/s (Gigabit Ethernet), 1062.5 Mb/s (Fibre Channel), 622.08 Mb/s (OC-12) and 155.52 Mb/s (OC-3).

From the CDR 12 the signal 13 leaves the opto-electronic regenerator interface 5 shown in detail in Fig. 2 and enters the electronic signal switch matrix 3 (shown in Fig. 1 with the incoming signal 13).

The main function of the CDR 12 in the present invention is to provide retimed data suitable for input to the electronic switch matrix 3. However, the multi-rate CDR 12 device may perform other functions. For example, the output bit clock and retimed data may be used for performance monitoring. To this end, multi-protocol signal processing may be provided as part of the interface. For example, certain data transmission protocols including the various rates of Ethernet and Fibre Channel protocols use only a subset of all possible bit-patterns as transmitted symbols. Accordingly, the appearance of an illegal symbol in the bit-stream can be interpreted as a sign of transmission errors. In its simplest form, the necessary signal processing function to perform illegal symbol detection for such protocols may comprise a serial-parallel converter and a fast look-up table in a fast memory for example. The fast memory would be programmed at connection establishment with the valid symbols expected during transmission of the selected protocol. The received symbols can then be continuously compared against the valid symbols to determine e.g. the error-rate performance. Further, certain protocols (such as Ethernet) that transmit data in packets use particular transmitted symbols to indicate the start and end of data packets. For such protocols it may also be possible to determine e.g. the packet-rate of the channel. As a further example, other protocols such as SONET/SDH include fields in the bit stream that may be written to and read from to provide end-to-end performance monitoring purposes. Accessing these fields requires a CDR device to derive the bit rate of the stream.

Returning now to Fig. 1, the signal 13 arrives at the switch 3 after leaving the multi-rate CDR 12 in Fig. 2. Under normal practice, the bit-rate limited NxN electronic switch matrix 3 in Fig. 1, switches the input signal 13 to an output signal 14 according to an external control set up. The bit rate limited electronic signal switch matrix 3 comprises an electronic switch matrix that is bit-rate limited to the maximum rate that a telecommunications network is likely to support. Such an NxN electronic switch matrix is often implemented with Bi-CMOS or Silicon-Germanium technologies and devices presently available support switch paths up to 10 Gb/s. Currently, an NxN electronic switch arrays of up to 68 input ports and 68 output ports are available in the market place. Furthermore, such switch arrays can often support multicast and broadcast capabilities.

With the deployment of DWDM systems as an alternative to higher order TDM it is likely that the upper practical bit rate required for many future telecommunications networks will be 10 Gb/s. Some feeder systems such as Metro and Access networks might only require bit rates up to 2.5 Gb/s. Ideally, there should be no lower bit-rate limit to the electronic signal switch, although in practice the electronic signal switch part only needs to support the lowest practical bit-rate supported by the multi-rate opto-electronic regenerator.

Turning now to Fig. 1, when the signal 14 leaves the electronic signal switch matrix 3 it is then transmitted to an opto-electronic regenerator interface 15 which then directs the signal 16 onto a DWDM Mux 17 from which the signal 18 is then output back to the network to continue to the selected destination.

The electro-optic transmitter 19 may comprise an externally-modulated CW laser source, which may be e.g. a distributed feedback (DFB) semiconductor laser diode integrated with an electro-absorption (EA) modulator. Alternatively, the electro-optic transmitter 19 may comprise a directly-modulated semiconductor laser source. It should be noted, however, that a directly-modulated source may be more limited in maximum bit-rate and transmission distance compared to an externally-modulated source. Thus, while lower in cost, the directly-modulated source may be more limited in application than the externally-modulated source.

The wavelength of the laser source employed in the electro-optic transmitter 19 must either be selected during fabrication or tuned on-site to the wavelength of the DWDM Mux 17 port to which the regenerator interface 15 is connected. From the electro-optic transmitter 19, the signal 16 (as shown in both, Figs. 1 and 2) is directed at the DWDM Mux 17 (as shown in Fig. 1 only) from which the signal 18 is then output back to the network (as shown in Fig. 1 only) to continue to the selected destination.

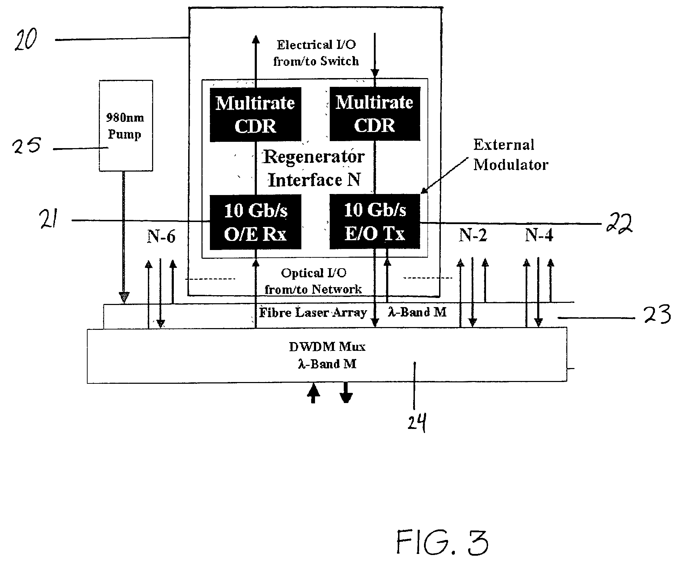

In another embodiment, the opto-electronic regenerator interface 5, 15 can be implemented as a wavelength independent multi-rate regenerator. This implementation of a wavelength independent multi-rate regenerator 20 is shown in detail in Fig. 3. The working of a wavelength independent multi-rate regenerator 20 employs identical external modulators on each of the opto-electronic receiver 21 and the electro-optic transmitter 22 and an external fiber laser array 23 that is wavelength matched to the DWDM filter array 24. Since both, the fiber laser array 23 and the DWDM filter array 24, use purely passive optics, the preferred implementation would be to have them co-located, with an external 980nm pump laser 25 providing optical power to the fiber laser array 23.

When combined with hierarchical wavelength multiplexing, it is possible to minimize the number of variations of wavelength-matched DWDM filter 24 and CW source parts to be equal to the number of higher-order wavelength bands supported. This will increase the manufacturing volumes of each variation of this part and thus reduce costs. Furthermore, through the use of wavelength-independent external modulators, each multi-rate regenerator interface 20 is now substantially identical and thus can be manufactured in volume at much lower cost.

As shown in Figs. 1, 2 and 3 a modular implementation of an OEO switch is provided. The benefit of this modularity is the separation and optimization of different parts with interconnects joining the parts together as a whole.

Turning to Fig. 1, the interconnects between the electronic signal switch part 3 and the multi-rate regenerator part 5, 15 can be either electrical or optical. If electrical, they must be relatively short and their impedance well controlled. If this can be achieved then the electrical interconnects may introduce little additional phase jitter. This option is illustrated in Figs. 2 and 3. If optical interconnects are used greater phase jitter may be introduced which can limit the ability to cascade switch elements to build larger bit-rate transparent NxN switches. Furthermore, AC-coupled optical interconnects will limit the lower bit-rate limit of the Switch.

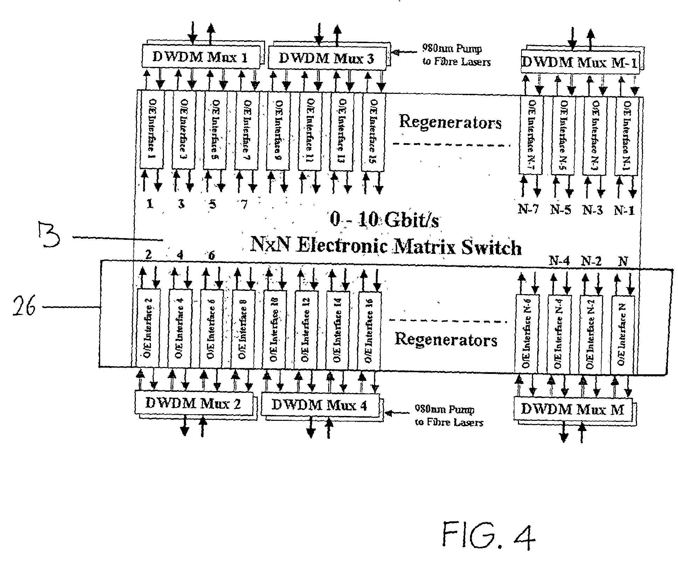

Turning to Fig. 4, there is shown the integration of multiple low cost wavelength independent multi-rate regenerator interfaces 26 with the electronic signal switch part 3, using low cost electrical interconnects between them. The result is effectively a bit-rate independent OEO switch matrix that can be directly compared cost-wise with the same part of the OOO Switch. In practice, the electronic signal switch matrix 3 is somewhat more advanced than the optical switch matrix, since the OEO switch includes full signal regeneration, and may include e.g. performance monitoring as described previously. Further it provides simpler optical attenuation/dispersion management due to the isolation of transmission segments from each other. Since there are no wavelength-dependent devices on the electronic signal switch matrix 3, the production volumes can be high and the costs low.

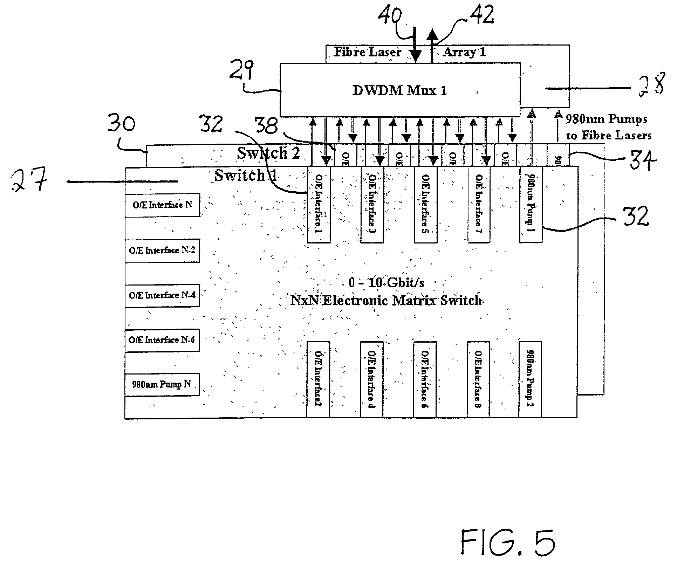

In the provision of high availability telecommunications networks require the switch to be duplicated - whether the switch is an OOO switch or an OEO switch. Figure 5 illustrates a duplicated OEO switch implementation - as an extension of Figure 4. The integrated electronic switch and regenerator part 27 is also the ideal place to locate the 980nm pump lasers 28, which as for the OOO switch, must also be duplicated to achieve high availability.

The duplicated integrated electronic switch and regenerator parts 27, 30 are identical in all respects. Each provides a 980 nm CW pump laser source 32, 34 that is connected to the Fibre Laser Array 28. Either pump laser source 32, 34 is able to provide sufficient power to energise the Fibre Laser Array 28. Accordingly if either one of the switch parts 27, 30 should fail the Fibre Laser Array 28 will continue to operate. As in the unprotected embodiment (see Figure 3 and Figure 4) each output of the Fibre Laser Array is a CW laser source matched to one wavelength of the DWDM Mux 29. Each CW output of the Fibre Laser Array 28 is output to the corresponding opto-electronic interfaces e.g 36, 38 on both switch parts 27, 30. The outputs of the duplicated opto-electronic interfaces e.g. 36, 38 are connected to the DWDM Mux 29, so that either may be used to receive signals arriving from the DWDM input port 40, and to send signals to be transmitted via the DWDM output port 42. Accordingly if either one of the integrated electronic switch and regenerator parts 27, 30 should fail, the other will still be available to receive and transmit signals.

It will be understood that the invention disclosed and defined herein extends to all alternative combinations of two or more of the individual features mentioned or evident from the text or drawings. All of these different combinations constitute various alternative aspects of the invention.

The foregoing describes embodiments of the present invention and modifications, obvious to those skilled in the art can be made thereto, without departing from the scope of the present invention.

## Claims

1. An optical switch comprising:
at least a first demultiplexer (4) for demultiplexing a series of wavelength division multiplexed signals (9) into corresponding spatially separated demultiplexed signals (10);
a series of first optical to electronic interface units (5;20) interconnected to said spatially separated demultiplexed signals (10), including:
optical to electronic conversion means (11;21) for converting input optical signals to corresponding electrical signals;
data and clock recovery means (12) for recovery of data and corresponding clocking information from said electrical signal and outputting said data as a first data stream (13), said data and clock recovery means being able to recover data streamed at multiple different clock rates;
an electronic switch (3) for transmitting said data stream to one of a series of output ports under the control of an external control signal;
a series of second electronic to optical interface units (15;20) at said output ports, including:
data and clock recovery means (12) for recovery of data and corresponding clocking information from said electrical signal and outputting said data as a second data stream (14);
electronic to optical conversion means (19;22) for said data stream to a corresponding optical stream 16; and
at least a first multiplexer (17) interconnected to a plurality of optical interface units (15;20) for multiplexing the optical stream (16) of each interface unit together to form a combined optical data stream output (18).

2. A switch as claimed in claim 1 wherein the data and clock recovery means (12) of said second electronic to optical interface units (15;20) further includes a clock recovery means being able to recover data streamed at multiple different clock rates through the second electronic to optical interface units (15;20).

3. A switch as claimed in claim 1 or 2, wherein said electronic to optical conversion means (19;22) comprises an externally modulated semiconductor laser having wavelength specific output characteristics.

4. A switch as claimed in claim 1 or 2, wherein said electronic to optical conversion means a directly modulated semiconductor laser having wavelength specific output characteristics.

5. An optical switch comprising:
at least a first demultiplexer (4) for demultiplexing a series of wavelength division multiplexed signals (9) into corresponding spatially separated demultiplexed signals (10);
a series of first optical to electronic interface units (5;20) interconnected to said spatially separated demultiplexed signals (10), including:
optical to electronic conversion means (11;21) for converting input optical signals to corresponding electrical signals;
data and clock recovery means for recovery of data and corresponding clocking information from said electrical signal and outputting said data as a first data stream (13);
an electronic signal switch (3) for transmitting said data stream to one of a series of output ports under the control of an external control signal;
a series of second electronic interface units (15;20) at said output ports, said second electronic to optical interface units including a laser array (23) wavelength matched to the output wavelengths of a first multiplexer;
at least a first multiplexer (17) interconnected to a plurality of electronic to optical interface units (15;20) for multiplexing the optical stream (16) of each interface unit together to form a combined optical data stream output (18).

6. A switch as claimed in claim 6 wherein said laser array comprises a fiber laser array (23).

7. A fault tolerant switching unit including a first and second switch (27,30) each as claimed in any preceding claim, each switch interconnected to the same first demultiplexing unit (29) and first multiplexer so as to provide fault tolerant operation of said switch.

8. An optical switch comprising at least a first demultiplexer (4) for demultiplexing a series of wavelength division multiplexed signals (9) into corresponding spatially separated demultiplexed signals (10); a series of first optical to electronic interface units (5;20) interconnected to said spatially separated demultiplexed signals (10); an electronic switch (3) for transmitting said data stream to one of a series of output ports under the control of an external control signal; a series of second electronic to optical interface units (15;20) at said output ports and at least a first multiplexer interconnected to a plurality of optical interface units (15;20) for multiplexing the optical stream (16) of each interface unit together to form a combined optical data stream output (18).
